(19) Europäisches Patentamt
European Patent Office
Office européen des brevets

(11) EP 2 263 795 A1

(12) **EUROPEAN PATENT APPLICATION**

(43) Date of publication:
**22.12.2010 Bulletin 2010/51**

(21) Application number: **09175086.9**

(22) Date of filing: **05.11.2009**

(51) Int Cl.:
***B01J 35/00*** *(2006.01)* ***B01J 23/42*** *(2006.01)*
***B01J 23/46*** *(2006.01)* ***B01D 53/86*** *(2006.01)*
***B01J 31/18*** *(2006.01)* ***B01J 21/06*** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **25.05.2009 KR 20090045679**

(71) Applicant: **Sungkyunkwan University Foundation for Corporate Collaboration**
**Jangan-gu,**
**Suwon**
**Gyeonggi-do 440-746 (KR)**

(72) Inventors:
- **Kim, Moon-Sun**
  **Gyeonggi-do 426-789 (KR)**
- **Kim, Byung-Woo**
  **Seoul 137-771 (KR)**
- **Kim, Ji-Sun**
  **Seoul 122-010 (KR)**
- **Cho, Hong-Kwan**
  **Busan 611-763 (KR)**

(74) Representative: **Eisenführ, Speiser & Partner**
**Postfach 10 60 78**
**28060 Bremen (DE)**

(54) **Photocatalyst, preparation method thereof, photoreactor, and photolysis process**

(57) The present invention relates to a photocatalyst comprising a core part containing titanium dioxide, and a doped part formed on surfaces of said core part, containing a ruthenium-based dye and a platinum compound, a preparation method thereof, a photoreactor and a photolysis process. In accordance with the present invention, a photocatalyst having excellent light resistance and photosensitivity capable of removing volatile organic compounds even in poor ultraviolet light conditions, and a preparation method thereof is provided, and a photoreactor comprising said photocatalyst and an efficient photolysis process using the same are also provided.

EP 2 263 795 A1

## Description

### CROSS-REFERENCE TO RELATED APPLICATION

This application claims priority to and the benefit of Korean Patent Application No. 10-2009-0045679 filed on May 25, 2009, the disclosure of which is incorporated herein by reference in its entirety.

### BACKGROUND

### Field of the Invention

The present invention relates to a photocatalyst, a preparation method thereof, and a photolysis device using the same and a photolysis process of volatile organic compounds.

### Discussion of Related art

Materials causing bed smells are usually referred to as volatile organic compounds (VOC) and are frequently produced over all industry such as air degassing processes, hazardous waste incinerator plants, the chemical manufacturing industry, the textile manufacturing industry, fertilizer manufacturing plants, biological wastewater treatment plants, carbon recycling plants, urban soil landfills, dry cleaning equipment, degreasing plants, Freon facilities and the food industry.

In addition, volatile organic compounds such as toluene, acetone, methyl ethyl ketone (MEK) exhausted from factories have such severe bed smells that they incur displeasure even in a low concentration and cause disorders of the respiratory organs, carcinogenesis, and the like, on being exposed to high concentrations of volatile organic compounds for a long time.

As the distance between houses and factories decrease due to enlargement of residential areas, the need to manage materials inducing bed smells increase. It is becoming an important problem, in view of decreasing burden in the environmental cost, to efficiently remove volatile organic compounds inevitably exhausted in the operation steps. Especially, the hazards to the body due to various VOCs produced from interior finishes, such as sick house syndrome, is becoming a severe problem. Therefore, it is necessary to solve such problems.

Methods presently used to remove volatile organic compounds are an absorption method, a combustion method, an air dilution method and a biofiltration method.

The absorption method is economically inexpensive and has simple equipment so is frequently used. However, since the efficiency of absorbents is so lowered in a short time that they must be exchanged often, there is a problem in view of cost. The combustion method has an advantage that the removing process is simple and the management is easy. However, it is apprehended to increase power costs and to incur harmful secondary by-products, following combustion.

In addition, the air dilution method is easily used, but is in danger of inducing severe surrounding environmental problems if applied for a long time. There is a problem that the biofiltration method has restricted subject materials and is not suitable to a high concentration of hazardous materials or high speed treatment.

To solve such problems, techniques of removing organic compounds using photocatalysts with ability to degrade VOCs have been developed.

In KR Patent No. 0324541, a method of removing VOCs such as trichloroethylene (TCE) using a tube type photochemical reactor filled with fillers on which a photocatalyst is coated, is disclosed.

Also, in KR Patent No. 0469005, a method of improving the efficiency of photolysis comprising removing VOCs using a photoreactor and attaching a support coated with a sol of a photocatalyst on a metal plate, wherein a reflector is attached to an inside wall of said photoreactor, is disclosed.

However, said methods are different from a technique having excellent efficiency of photolysis in the photocatalyst itself in that they are techniques for removing organic compounds such as VOCs by coating a photocatalyst, such as titanium dioxide, conventionally used on a filling layer or a support, and the like. There is a problem that the photocatalyst does not remove VOCs under conditions of poor intensity of ultraviolet Light.

Furthermore, in KR Patent No. 0714849, a method of removing VOCs by fixing titanium dioxide in a reactor using silane, is disclosed. However, when silane is used as a binder for fixing titanium dioxide, the binder has excellent bonding strength, but it is apprehended that silane will be modified into a material having a double bond by expsing it to high heat for a long time. Therefore, there is a problem that efficiency of photolysis in titanium dioxide may be lowered.

## SUMMARY OF THE INVENTION

The present invention has been created to solve the problems as mentioned above, and one object of the present invention is to provide a photocatalyst which has excellent efficiency of photolysis even with poor intensity of ultraviolet light by increasing photoactivity into the range of visible light, and a method of preparing the same.

In addition, the other object of the present invention is to provide a photoreactor comprising said photocatalyst and a photolysis process for removing volatile organic compounds using the same.

The present invention provides as means for solving said problem a photocatalyst comprising a core part containing titanium dioxide; and a doped part, formed on surfaces of said core part, containing a ruthenium-based dye and a platinum compound.

In addition, the present invention provides as another means for solving said problem a method of preparing a photocatalyst according to the present invention comprising a step of doping a ruthenium-based dye and a platinum compound on the surfaces of titanium dioxide.

Furthermore, the present invention provides as another means for solving said problem a photoreactor comprising a support; and a photocatalyst layer, formed on said support, containing a photocatalyst according to the present invention.

The present invention also provides a photolysis process comprising a step of introducing volatile organic compounds and moisture to the photoreactor as mentioned above.

## BRIEF DESCRIPTION OF THE DRAWINGS

The above and other features and advantages of the present invention will become more apparent to those of ordinary skill in the art by describing in detail exemplary embodiments thereof with reference to the attached drawings in which:

Fig. 1 is a schematic view representing a photolysis device according to one embodiment according to the present invention.

Fig. 2a and Fig. 2b represent surface photographs of a photocatalyst layer comprising a photocatalyst prepared in accordance with Preparation Example 1 in the present invention.

## DETAILED DESCRIPTION OF EMBODIMENTS

The present invention relates to a photocatalyst comprising a core part containing titanium dioxide; and a doped part, formed on surfaces of said core part, containing a ruthenium-based dye and a platinum compound.

The photocatalyst according to the present invention is explained in more detail below.

As mentioned above, the photocatalyst according to the present invention comprises a core part containing titanium dioxide; and a doped part, formed on surfaces of said core part, containing a ruthenium-based dye and a platinum compound.

The titanium dioxide herein is a material that may be used as a photocatalyst which photoreacts to have a photoactive effect, and may be composed of, for example, a form of spherical particles, although its form is not particularly limited.

In addition, the titanium dioxide used herein may be used as a photocatalyst having a relatively wide specific surface area such that hazardous volatile organic compounds (VOCs) may be easily attached thereto. The specific surface area of titanium dioxide may be, for example, 50 to 350 $m^2/g$, preferably 100 to 350 $m^2/g$, more preferably 150 to 350 $m^2/g$, and most preferably 200 to 350 $m^2/g$, although it is not particularly limited.

If the specific surface area of titanium dioxide is less than 50 $m^2/g$, it is apprehended that the degradation efficiency will be lowered as the contact area of volatile organic compounds is relatively decreased. If it is in excess of 350 $m^2/g$, it may be hard to prepare titanium dioxide.

In addition, the average particle diameter of titanium dioxide is not particularly limited, as long as the excellent photolysis effect is represented under light irradiation, depending on the purpose of the present invention, but the average diameter may be, for example 10 to 100 nm, and preferably 20 to 50 nm.

Meanwhile, the ruthenium-based dye herein is a material having excellent light resistance and photosensitivity, which absorbs light in a wavelength range of about 500 to 550 nm, and thus, serves to increase the photoactive range of titanium dioxide, which photoreacts in a wavelength range of 320 to 400 nm, into the visible wavelength range.

As long as said ruthenium-based dye has a function as mentioned above, the specific kind thereof is not particularly limited, but may be, for example, a compound represented by Formula 1 or a salt thereof:

[Formula 1] $RuL_2(M)_2$

wherein,
"L" is 2,2'-bipyridine containing at least one functional group selected from the group consisting of hydrogen, a $C_1$-$C_{12}$ alkyl group and -C(=O)$OR_1$,
"$R_1$"is hydrogen or tetrabutylammonium, and
"M"is NCS, CN, Cl, Br or I.

In addition, particularly, said ruthenium-based dye may be a compound represented by Formula 2 or a salt thereof:

【Formula 2】

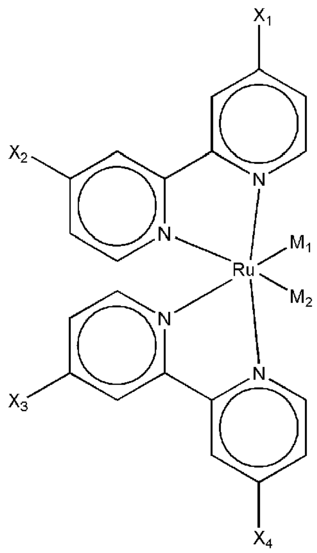

wherein,
"$X_1$, $X_2$, $X_3$ and $X_4$"are each independently hydrogen, a $C_1$-$C_{12}$ alkyl group or -C(=O)$OR_1$, wherein
"$R_1$"is hydrogen or tetrabutylammonium, and
"$M_1$ and $M_2$"are each independently NCS, CN, Cl, Br or I.

Furthermore, as more preferred examples, said ruthenium-based dye may be a compound represented by any formula selected from the following Formulas 3 to 5:

【Formula 3】

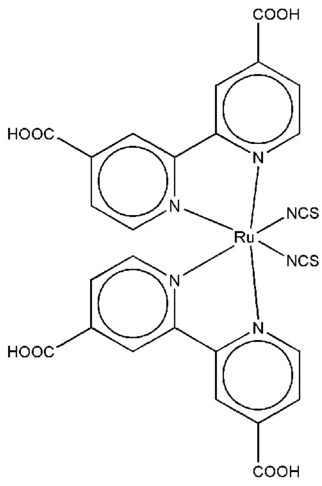

【Formula 4】

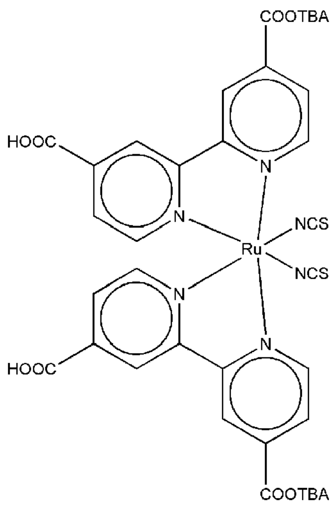

【Formula 5】

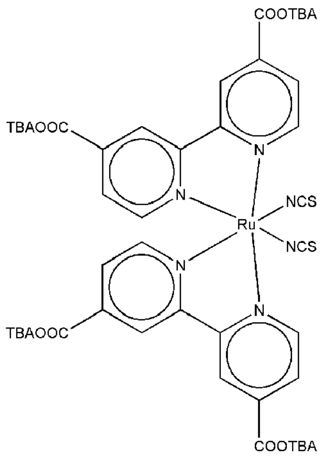

wherein, "TBA" is tetra-n-butylammonium.

The ruthenium-based dyes as illustrated above are only examples of the present invention. Ruthenium-based dyes used in the present invention are not limited to those as illustrated above.

As long as said ruthenium-based dye may embody a function as mentioned above in a photocatalyst according to the present invention, its content is not particularly limited, but it may be contained in an amount of 0.01 to 5 parts by weight, relative to 100 parts by weight of titanium dioxide.

If said ruthenium-based dye is contained in an amount of less than 0.01 parts by weight, relative to 100 parts by weight of titanium dioxide, it is hard to obtain the efficient photosensitive effect. If it is in excess of 5 parts by weight, it is apprehended that the photolysis effect will be deteriorated as absorbance of UV light may be inhibited.

Meanwhile, "a platinum compound" is doped on surfaces of the core part containing titanium dioxide, together with the ruthenium-based dye, to form a doped part, and serves to improve the photoactivity of the titanium dioxide photocatalyst by attracting electrons in an excited state to accelerate charge separation and separating electrons physically from holes in the valence band.

Although the kind of said platinum compound is not particularly limited, it may include, for example, platinum or a plantiniferous compound.

That is, said platinum compound may include not only platinum as such, but also a platiniferous compound such as platinum oxides and platinum alloys known in this field within a range which does not lower the desired photoactive effect herein, as mentioned above. Specifically, platinum may be used.

In addition, the content of said platinum compound is not particularly limited, but it may be contained in an amount of 0.01 to 2 parts by weight, relative to 100 parts by weight of titanium dioxide.

If the content of said platinum compound is less than 0.01 parts by weight, relative to 100 parts by weight of titanium dioxide, it is apprehended the effect of separating charges and photosensitivity will be lowered. If it is in excess of 2 parts by weight, it is apprehended that optical resolution will be relatively lowered.

The photocatalyst herein may be comprised of a form whereby the platinum compound is doped on surfaces of titanium dioxide particles contained in the core part and the ruthenium-based dye is doped on the platinum compound, or a form whereby a mixture comprising the platinum compound and the ruthenium-based dye are doped together. More specifically, the photocatalyst according to the present invention may be comprised of a form whereby said ruthenium-based dye and platinum compound contained in the doped part are sequentially doped on the core part.

That is, when the photocatalyst according to the present invention is comprised of a form whereby the ruthenium-based dye is doped on surfaces of titanium dioxide and the platinum compound is doped on said ruthenium-based dye, it may have a more excellent photolysis effect and have optical resolution as mentioned above, even in poor intensity of UV light.

As a specific example, when a volatile organic compound is supplied to a coating layer coated with the photocatalyst according to the present invention and ultraviolet light is irradiated thereto, the photocatalyst may have at least about 95% of optical resolution.

In addition, the present invention also relates to a method of preparing the photocatalyst according to the present invention comprising a step of doping a ruthenium-based dye and a platinum compound on surfaces of titanium dioxide.

In the method of preparing the photocatalyst according to the present invention, the ruthenium-based dye and the platinum compound may be doped on surfaces of a core part formed by titanium dioxide, as mentioned above. The doping order of said ruthenium-based dye and platinum compound is not particularly limited, but, for example, following doping the ruthenium-based dye, the platinum compound may be doped on said ruthenium-based dye.

More specifically, the step of doping the ruthenium-based dye and the platinum-based particles on surfaces of titanium dioxide sequentially is explained by the following example. It may comprise a step of first doping the ruthenium-based dye on surfaces of titanium dioxide particles using a solution containing the ruthenium-based dye; and a step of second doping the platinum compound on the doped ruthenium-based dye using a solution containing the platinum compound.

Here, said solution containing the ruthenium-based dye refers to a solution obtained by dissolving the ruthenium-based dye in a solvent which is capable of dissolving the ruthenium-based dye as mentioned above. Although the kind of solvent which is capable of dissolving the ruthenium-based dye is not particularly limited, it may include, for example, water, an alcohol such as ethanol or a suitable solvent known in this field as other solvents which are capable of dissolving ruthenium-based dyes.

In addition, said solution containing the platinum compound refers to a solution obtained by dissolving the platinum compound in a solvent which is capable of dissolving the platinum compound as mentioned above. Although the kind of said solvent which is capable of dissolving the platinum compound is not particularly limited, it may include, for example, a solvent such as a sodium carbonate solution and a sodium hydroxide solution or a suitable solvent known in this field as other solvents which are capable of dissolving platinum compounds.

Said ruthenium-based dye may be doped on surfaces of titanium dioxide particles using a ruthenium-based dye containing solution contained in a concentration of $1 \times 10^{-5}$ M to $9 \times 10^{-4}$ M, based on 1 g of titanium dioxide particles, and said platinum compound may be further doped on the ruthenium-based dye doped on surfaces of titanium dioxide particles using a platinum compound containing solution contained in a concentration of $1 \times 10^{-4}$ M to $9 \times 10^{-3}$ M, based on 1 g of titanium dioxide particles.

If the molar concentration of said ruthenium-based dye containing solution is less than $1 \times 10^{-5}$ M, it is apprehended that the efficient photosensitivity effect will not be obtained. If it is in excess of $9\times10^{-4}$ M, it is apprehended that the optical resolution will be lowered by controlling absorbance of UV light.

In addition, if the molar concentration of said platinum-based particle containing solution is less than $1\times10^{-4}$ M, it is apprehended that the photosensitivity will be lowered. If it is in excess of $9\times10^{-3}$ M, it is apprehended that the optical resolution will be lowered.

Without particularly limiting any method of synthesizing titanium dioxide used in the method of preparing the photocatalyst according to the present invention, titanium dioxide may be, for example, prepared by a first synthesis method comprising a step (1) of extracting and separating a surfactant from a reactant containing a solvent, a surfactant and titanium alkoxide; and a step (2) of sintering the residual reactant, wherein the surfactant is separated in said step (1).

Although the kind of solvent used in said step (1) is not particularly limited, a solvent such as water, alcohol or cellosolve may be used. Specifically, said alcohol may be methanol, ethanol, propanol, butanol, isopropanol or diacetylalcohol, and the like, and said cellosolve may be also methyl cellosolve, ethyl cellosolve, butyl cellosolve or cellosolve acetate, and the like, without particularly limiting any kind.

Although the kind of surfactant used in said step (1) is not particularly limited, an alkyl surfactant such as an alkyl halide, an alkyl amine and an alkyl phosphate may be used alone or in a mixture of at least two species thereof. The carbon atom number in the alkyl group contained in said alkyl surfactant is not particularly limited, but, specifically, an alkyl halide, an alkyl amine or an alkyl phosphate having 10 to 20 carbon atoms may be used.

If said carbon atom number contained in the alkyl surfactants is less than 10, it is apprehended that the effect of improving specific surface area will be lowered. If it is in excess of 20, it is apprehended that it is hard to control pore shapes and sizes.

Said surfactant may be included in the reactant of step (1) in an amount of 2 to 25 parts by weight, preferably 3 to 23, and more preferably 5 to 20 parts by weight, relative to 100 parts by weight of solvent.

If said surfactant is included in the reactant of step (1) in an amount of less than 2 parts by weight, relative to 100 parts by weight of solvent, it is apprehended that less pores will be formed. If it is in excess of 25 parts by weight, it is apprehended that pore shapes and sizes will be formed irregularly.

The titanium alkoxide used in step (1) may be a compound represented by the following formula 6.

[Formula 6] $\mathbf{Ti(OR_2)_4}$

wherein, "$R_2$"is an alkyl group with 1 to 6 carbon atoms.

Although the kind of said titanium alkoxide is not particularly limited, for example, one or more selected from the group consisting of titanium tetrapropoxide, titanium tetraisopropoxide, titanium tetradiisopropoxide, titanium tetrabutoxide, titanium tetraethoxide and titanium tetramethoxide may be used.

The amount of titanium alkoxide in the reactant in the step (1) is not particularly limited, but titanium alkoxide may be included, for example, in an amount of 1 to 10 parts by weight, relative to 100 parts by weight of solvent. If the amount of said titanium alkoxide is less than 1 part by weight, it is apprehended that the photolysis effect will be lowered. If it in excess of 10 parts by weight, the concentration of the photocatalyst becomes so high that the light loss may be caused, and thus it is apprehended that the photolysis effect will be lowered.

Furthermore, the solvent used in the step (1) may further comprise an acid or base catalyst to control pH and a reaction rate and obtain storage stability and dispersibility in a sol of an anatase type titanium dioxide.

Considering the physical properties of the photocatalyst sol, such as storage stability, said acid or base catalyst may be used alone or in combination of at least two species thereof.

Although the kind of said acid catalyst or base catalyst is not particularly limited, the acid catalyst may include, for example, acetic acid, phosphoric acid, sulfuric acid, hydrochloric acid, nitric acid, chlorosulfonic acid, para-tolunesulfonic acid, trichloroacetic acid, polyphosphoric acid, iodic acid, iodic anhydride or perchloric acid, and the like, and the base catalyst may include sodium hydroxide, potassium hydroxide, n-butylamine, imidazole, or ammonium perchlorate, and the like.

A mixture containing a solvent, a surfactant and titanium alkoxide herein may be stirred and reacted to obtain a reactant of the step (1).

The stirring conditions for producing said reactant are not particularly limited, but the mixture is preferably subjected to stirring, for example, for 20 minutes to 1 hour. Therefore, as a reactant of the step (1), the solidified titanium dioxide may be obtained, and after drying said solidified titanium dioxide, the surfactant may be extracted.

The conditions for drying said solidified titanium dioxide are not particularly limited, but it may be dried, for example, for 1 to 3 hours. In the method of extracting the surfactant, various extracting methods known in this field may be used, and specifically, an extracting method using an aqueous solution of an inorganic acid or a supercritical extraction may be utilized.

In the extracting method using an aqueous solution of an inorganic acid, the surfactant may be extracted and separated by precipitating the solidified titanium dioxide formed from the reactant in the step (1), in an aqueous solution of an inorganic acid such as hydrochloric acid, nitric acid and sulfuric acid.

The concentration of said aqueous solution of an inorganic acid is not particularly limited, but, for example, an aqueous solution of an inorganic acid with 1 ml/L to 20 ml/L may be used. If the concentration of said aqueous solution of an inorganic acid is less than 1 ml/L, then it is apprehended that the specific surface area of titanium dioxide will decrease as the amount of surfactant extracted is lowered. If it is in excess of 20 ml/L, it is apprehended that the efficiency will be lowered as the extracting effect may not improve, and will only increase the production cost.

Furthermore, when said surfactant is extracted, the applied extracting time is not particularly limited, but it may be extracted, for example, by precipitating the solidified titanium dioxide for 3 to 5 hours.

In addition, when any material is modified into a supercritical fluid by exposing to it higher temperature and pressure than a critical point thereof, the supercritical extraction is a technique using the same, and specifically, the surfactant may be extracted and separated using a supercritical fluid such as carbon dioxide supercritical fluid.

When said supercritical extraction is carried out, conditions, such as the applied pressure, temperature and time, are not particularly limited, but may be suitably adopted within the condition range known in this field, so that the desired surfactant herein may be easily extracted and separated. For example, using the carbon dioxide supercritical fluid obtained by a reaction at a pressure of 8 MPa to 15 MPa and a temperature of 30°C to 50°C for 10 to 60 minutes as an extraction solvent, the surfactant may be extracted and separated from the solidified titanium dioxide.

Furthermore, the step (2) is a step of sintering the residual reactant precipitated when pores are formed as the surfactant in the step (1) is extracted and separated.

That is, the step is a process for sintering titanium dioxide so that pores are formed. The sintering conditions are not particularly limited, but the process conditions usually used in this field may be suitably adopted within the treatable ranges such that titanium dioxide may have a crystal characteristic. For example, it may be first sintered at a temperature of 80°C to 110°C for 30 minutes to 2 hours, and then second sintered at a temperature of 400°C to 700°C for 30 minutes to 2 hours.

Furthermore, in addition to the first synthesis method as mentioned above, titanium dioxide herein may also be prepared by a second synthesis method comprising the step (A) of reacting a mixture containing a solvent, titanium alkoxide and an activated carbon; and the step (B) of heat treating the reactant obtained in the step (A) to burn the activated carbon.

The step (A) is a step of reaction of a mixture containing a solvent, titanium alkoxide and an activated carbon.

Without particularly limiting the kind of solvent and titanium alkoxide contained in the mixture of the step (A), for example, the same materials as the solvent and titanium alkoxide contained in the reactant used in the step (1) of the synthesis method comprising the step (1) and the step (2) may be used.

In addition, without particularly limiting the amount of titanium alkoxide in said mixture of the step (A), for

example, titanium alkoxide may be contained in an amount of 5 to 15 parts by weight, relative to 100 parts by weight of a solvent.

If said titanium alkoxide is contained in an amount of less than 5 parts by weight, relative to 100 parts by weight of a solvent, it is apprehended that the optical resolution will not only be lowered, but it will also be hard to synthesize titanium dioxide. If it is contained in an amount in excess of 15 parts by weight, it is apprehended that the photolysis effect will be lowered as the concentration of the photocatalyst becomes so high so as to induce light loss.

Furthermore, the activated carbon contained in said mixture of the step (A) is mixed together with a solvent and titanium alkoxide on synthesis of titanium dioxide to form fine pores in the solidified titanium dioxide, and serves to increase the specific surface area.

Without particularly limiting the kinds and shapes of said activated carbon, all activated carbons usually used in this field may be used. For example, a spherical activated carbon may be used, and specifically, an activated carbon which does not cause the coagulation phenomenon by removing moisture sufficient to be capable of forming fine pores in titanium dioxide may be utilized.

More specifically, the activated carbon used in synthesizing titanium dioxide may be a spherical activated carbon.

When titanium dioxide is synthesized using such an activated carbon, the specific surface area of titanium dioxide may be highly increased as many fine pores are formed in titanium dioxide particles.

Said activated carbon may be one obtained by ageing it at an elevated temperature of 100°C or more for 1 hour or more, or subjecting it to a physical treatment such as a plasma treatment. To improve the dispersing effect, a silane surface preparing agent may be doped on surfaces of the activated carbon.

In addition, although the activated carbon used herein is not particularly limited in average diameter, it may have, for example, an average diameter of 0.1 μm to 10 μm, and specifically 0.3 μm to 5 μm. If the average diameter of the activated carbon is less than 0.1 μm, it is apprehended that the process efficiency will be lowered as the cost is not only expensive, but also it has a large coagulation phenomenon, so that the coagulation should be relieved by applying a separate surface preparation agent, and the like thereto. If it is in excess of 10 μm, it is apprehended that it is hard to form fine pores.

In addition, although the amount of the activated carbon in said mixture of the step (A) is not particularly limited, the activated carbon may be contained, for example, in an amount of 0.5 to 10 parts by weight, and preferably 0.5 to 7.5 parts by weight, relative to 100 parts by weight of solvent.

If said amount of the activated carbon is contained in an amount of less than 0.5 parts by weight, relative to 100 parts by weight of solvent, it may be hard to form fine pores in titanium dioxide. If it is contained in an amount in excess of 10 parts by weight, it is apprehended that it is hard to synthesize titanium dioxide particles as crystallization is accelerated.

The mixture containing a solvent, an activated carbon and titanium alkoxide as mentioned herein may be sufficiently stirred and reacted to obtain a reactant.

Although the stirring conditions for producing said reactant are not particularly limited, the mixture may be stirred, for example, for 30 minutes to 3 hours, and stirred using an ultrasonic processor to allow better stirring.

Furthermore, the step (B) is a step of heat treating the reactant obtained in the step (A) to burn the activated carbon.

That is, the activated carbon which forms fine pores inside titanium dioxide may be separated and removed by burning and exhausting it as carbon dioxide as the reactant obtained in the step (A) is heat treated.

The temperature of heat treatment in the step (B) is not particularly limited. As long as it is a temperature that titanium dioxide is capable of being treated at, such that the activated carbon which forms fine pores in titanium dioxide may be burned and removed and titanium dioxide may have a crystal characteristic, it is not particularly limited. However, the heat treatment may be carried out, for example, at a temperature of 400°C to 700°C, and preferably at a temperature of 500°C to 600°C.

More specifically, in the step (B), the reactant obtained in the step (A) may be first sintered at room temperature for 30 minutes to 4 hours, and then second sintered at a temperature of 400°C to 700°C for 30 minutes to 4 hours.

Here, if the heat treatment of the step (B) is carried out at a temperature of less than 400°C, it is apprehended that the distribution of fine pores formed in titanium dioxide becomes irregular as burning of the activated carbon and crystallization of titanium dioxide are less developed. If it is carried out at a temperature of more than 700°C, it is apprehended that the specific surface area of titanium dioxide will be decreased as fine pores are disrupted.

When the photocatalyst is prepared using the titanium dioxide prepared by using said second synthesis method, the specific surface area of the porous photocatalyst in which fine pores are formed may be highly increased. For example, the photocatalyst may have a specific surface area of 200 $m^2/g$ to 350 $m^2/g$.

If said specific surface area of the photocatalyst is less than 200 $m^2/g$, it is apprehended that the degradation efficiency of hazardous materials will be lowered. If it is in excess of 350 $m^2/g$, it is hard to synthesize titanium dioxide.

In a method of preparing the photocatalyst according to the present invention, titanium dioxide may be prepared by the first synthesis method comprising the step (1) and the step (2) or the second synthesis method comprising the

step (A) and the step (B), but is not limited thereto. The method may include other synthesis methods known in this field, as long as it is a method of synthesizing titanium dioxide representing photocatalyst characteristics.

As a method of synthesizing said titanium dioxide, the first synthesis method or the second synthesis method may each further comprise the step (3) of fixing the photocatalyst according to the present invention on a support or fixing a reactant or titanium dioxide obtained while carrying out the method of preparing the photocatalyst according to the present invention on a support.

Here, the step (3) may be carried out at any step while carrying out the first synthesis method or the second synthesis method, wherein the sequential order is not particularly limited.

For example, when the step (3) is carried out in the first synthesis method, it may be carried out after the step (1) or the step (2). More specifically, following extracting and separating the surfactant in the step (1), the obtained residual reactant is fixed on a support and then the sintering process of the step (2) may be carried out, or the titanium dioxide particles obtained by carrying out the sintering process of the step (2) may be also fixed on a support.

Furthermore, when the step (3) is carried out in the second synthesis method, it may be carried out after the step (A) or the step (B). More specifically, the obtained reactant in the step (A) is fixed on a support and then the sintering process of the step (B) may be carried out, or the titanium dioxide particles obtained by carrying out the sintering process of the step (B) may be also fixed on a support.

As described above, by further comprising the step (3) of fixing a reactant obtained while preparing the photocatalyst or the finally prepared photocatalyst on a support, a photoreactor may be prepared, wherein a photocatalyst layer is formed on a support, together with preparation of the photocatalyst.

In addition, although a method of fixing a reactant or a photocatalyst on a support in the step (3) is not particularly limited, it may be fixed with, for example, a wet coating method, and preferably a dip coating method.

When the method of preparing the photocatalyst according to the present invention further comprises the step (3), a reactant or a photocatalyst to be fixed on a support may further comprise an inorganic binder.

Although the kind of said inorganic binder is not particularly limited, for example, titanium-based inorganic binders such as titanium tetraisopropoxide, titanium tetraethoxide, titanium tetrapropoxide and titanium tetrabutoxide; zirconium-based inorganic binders such as zirconium tetraethoxide, zirconium tetrapropoxide and zirconium tetrabutoxide; aluminum-based inorganic binders such as aluminum tetraethoxide, aluminum tetrapropoxide and aluminum tetrabutoxide; and tungsten-based inorganic binders such as tungsten hexaethoxide may be used alone or in combination with at least two species thereof, and preferably titanium-based inorganic binders may be used.

Furthermore, when said inorganic binder is further contained in a reactant to be fixed, the amount is not particularly limited. For example, the inorganic binder may be contained in an amount of 0.01 to 0.5 parts by weight, relative to 100 parts by weight of a solvent. If said amount of the inorganic binder is less than 0.01 parts by weight, relative to 100 parts by weight of a solvent, it is apprehended that the bonding strength of the photocatalyst will be lowered by the ambient environment. If it is in excess of 0.5 parts by weight, it is apprehended that the photolysis effect of the photocatalyst will be lowered.

The present invention also relates to a photoreactor comprising a support; and a photocatalyst layer, formed on said support, containing the photocatalyst as mentioned above.

The kind of supports included in the photoreactor according to the present invention are not particularly limited. For example, said support may comprise glass, a metal plate, a ceramic plate, various polymers or optical fibers. Specifically, an optical fiber may be used because light is capable of being efficiently utilized. That is, in the photoreactor according to the present invention, the support may be one comprising at least one optical fiber.

Furthermore, although the kind of said optical fiber is not particularly limited, glass optical fibers or plastic optical fibers, and the like may be used. More specifically, an optical fiber prepared by quartz may be used, considering the sintering temperature.

Also, the diameter of said optical fiber is not particularly limited. For example, it may be 0.5 to 5 mm. If said diameter of the optical fiber is less than 0.5 mm, it is apprehended that it is hard to maintain durability of the photocatalyst layer. If it is in excess of 5 mm, it is apprehended that it is hard to maintain the optical resolution as partial light variation is developed. In addition, the thickness of said photocatalyst layer is not particularly limited. For example, it may be 2 $\mu$m to 15 $\mu$m, and preferably 5 $\mu$m to 10 $\mu$m. If the thickness of said photocatalyst layer is less than 2 $\mu$m, it is apprehended that the optical resolution will be lowered. If it is in excess of 15 $\mu$m, it is apprehended that the optical resolution will be lowered as light loss (for example, absorbance, reflection, and the like) is caused.

That is, the photoreactor according to the present invention may efficiently degrade hazardous materials such as volatile organic compounds, since the photocatalyst layer containing the photocatalyst, which is capable of expressing excellent optical resolution even in poor intensity of ultraviolet light, is formed on surfaces of the support such as optical fibers.

Furthermore, the present invention may provide a photolysis device comprising the aforementioned photoreactor; and a mixture feed part for feeding a mixture comprising volatile organic compounds and moisture to said photoreactor.

Said mixture feed part may be a storage tank including moisture together with such volatile organic compounds, and serves to feed the mixture stored in the storage tank to said photoreactor.

Therefore, a hydroxide radical (-OH) having high oxidizability, which is capable of degrading organic compounds, may be produced by irradiating a photocatalyst layer comprising a photocatalys with ultraviolet light. The mixture feed part may have a more excellent photolysis effect by feeding the mixture containing volatile organic compounds and moisture to the photocatalyst layer as mentioned above.

In addition, the photolysis device according to the present invention may further comprise a light irradiation part for irradiating the photocatalyst layer in the photoreactor with ultraviolet light.

The photocatalyst according to the present invention may has an excellent photolysis effect even in poor intensity of ultraviolet light, and thus the light intensity and wavelength of said ultraviolet are not particularly limited. For example, said light irradiation part may supply ultraviolet light having a wavelength of 300 nm to 400 nm. Also, said light irradiation part may comprise various light feeding devices known in this field. Although the kind of such device is not particularly limited, for example, a mercury lamp, a black light blue (BLB) lamp, and the like may be used.

The photolysis device according to the present invention may further comprise a moisture feed part for feeding moisture to the mixture feed part. When a predetermined amount of moisture is supplied during photolysis of organic compounds in the photoreactor, a more excellent photolysis effect may be achieved, and thus the photolysis device may further comprise a moisture feed part such that a predetermined amount of moisture is continuously supplied to be mixed with volatile organic compounds.

With reference to Fig. 1, a photolysis device according to one embodiment of the present invention is explained below. The photolysis device as illustrated below is only one example of the present invention, but it is not limited thereto.

Referring to Fig. , the photolysis device (100) according to one embodiment of the present invention comprises a light irradiation part (110), a photoreactor (130), a mixture feed part (150) and a moisture feed part (170).

Said light irradiation part (110) is one being capable of supplying light, such that a photocatalyst layer (not depicted), with which a photoreactor according to the present invention is equipped, may degrade volatile organic compounds depending on photoactivation. Specifically, it may be equipped with a mercury lamp (111) and a condenser (113).

That is, light supplied from said mercury lamp (111) may be condensed via a condenser (113), and then provided inside a photoreactor (130) using optical fibers (131) with which said photoreactor (130) is equipped.

Furthermore, said moisture feed part (170) may be equipped with a moisture producer (171), a flowmeter (173) and an air compressor (175), wherein air supplied from said air compressor (175) may be monitored through the flowmeter (173) and configured to flow into the moisture producer (171) at a constant flow rate, and then fed to said mixture feed part (150) in a state mixed with the predetermined amount of moisture produced from said moisture producer (171).

In said mixture feed part (150), volatile organic compounds (10) to be degraded, air and moisture are supplied, stirred and mixed, and then the mixture is transferred into said photoreactor (130).

The volatile organic compounds (10) flowing into said photoreactor (130) are degraded by photoactivation of the photocatalyst contained in the photocatalyst layer and exhausted through an outlet (133).

The present invention also relates to a photolysis process comprising the step of providing a photoreactor according to the present invention with volatile organic compounds and moisture.

Here, said mixture may comprise moisture together with volatile organic compounds as mentioned above. The amount of said moisture contained therein is not particularly limited. For example, the moisture may be contained in an amount of 30 to 50 % by volume in the mixture.

If the amount of moisture in said mixture is less than 30 % by volume, it is apprehended that the optical resolution will not only be lowered, but also volatile organic compounds will be not efficiently degraded as the outer chains (for example, methyl group, and the like) are degraded in a state maintaining a cyclic structure. If it is in excess of 50 % by volume, it is apprehended that light loss will be caused as the cohesion phenomenon of droplets is developed inside the photoreactor.

Furthermore, the photolysis process of volatile organic compounds according to the present invention may further comprise a step of providing said photoreactor with ultraviolet light, and thus improve the photoreaction effect.

[EXAMPLES]

The present invention is explained in detail below, with reference to the following examples. The following examples are intended to illustrate the present invention, but is not limited thereto. Analysis of samples prepared in examples of the present invention and comparative examples was carried out by the following methods.

<u>(1) Optical Resolution</u>

The optical resolution was tested by measuring the concentration of organic compounds present in a gas using

a gas chromatography-mass spectroscopic analyzer and a UV/VIS spectroscopic analyzer. An HP-6890 manufactured by Hewlett-Packard Company (USA) was used as the GC-mass spectroscopic analyzer, and a UV-160A manufactured by Shimadzu Corporation (JP) was used as the UV/VIS spectroscopic analyzer. The optical resolution was calculated by the following equation 1.

【Equation 1】

Resolution (%) = Concentration of the removed organic compounds/ Concentration of the initial organic compounds

(2) Specific Surface Area of Photocatalyst

After fixing a sample at 200°C for 40 minutes, the specific surface area of the photocatalyst was measured using an SA3100 Plus manufactured by Beckman Coulter, Inc. (USA).

(3) Thickness of Photocatalyst Laver

The thickness of the photocatalyst film fixed on a surface of a glass tube was measured using SEM (scanning electron microscopy, XL30 ESEM-FEG, FEI Co., N.Y., U.S.A.).

[Preparation Example 1] Synthesis of Titanium Dioxide

3 parts by weight of $Ti(OC_4H_9)_4$ and 8 parts by weight of nonadecylamine ($C_{19}H_{41}N$, Tokyo Chemical Industry Co., Ltd., Japan, Molecular weight 283.54) consisting of 19 carbon atoms were mixed, relative to 100 parts by weight of alcohol and stirred for 60 minutes, and then 0.1 parts by weight of titanium tetraisopropoxide (TTIP) was added thereto and sufficiently reacted with stirring for 30 minutes, followed by drying at 100°C for 2 hours.

Subsequently, the dried photocatalyst was precipitated in 9 ml/L nitric acid aqueous solution for 4 hours to extract the nonadecylamine component.

Then, the photocatalyst, wherein pores were formed, was first sintered at 100°C for 1 hour and second sintered at 600°C for 1 hour, such that titanium dioxide had a crystal characteristic.

The prepared titanium dioxide had a specific surface area of 175 $m^2$/g. Then, titanium dioxide having an average diameter of 35 nm was prepared by controlling the particle size of said titanium dioxide using a ball mill and a sieve.

[Preparation Example 2]

11 parts by weight of titanium tetraisopropoxide (TTIP) relative to 100 parts by weight of ethanol was added and stirred for 30 minutes, and then 2.29 Mℓ of water was added thereto and reacted for 120 minutes. 5.5 parts by weight of activated carbon having an average diameter of 0.3μm was added thereto, mixed and sufficiently stirred for 10 minutes with an ultrasonic processor.

The mixed liquid prepared as such, in a sol state, was fixed on surfaces of optical fibers by a dip coating method, and dried at room temperature for 2 hours. The dried reactant was again heat treated (sintered) at 550°C for 2 hours to remove the scattered activated carbon and to have a crystal characteristic of titanium dioxide.

The obtained titanium dioxide had a specific surface area of 325 $m^2$/g.

Titanium dioxide according to Preparation Example 2 is shown in Figure 2a (100-fold magnification) and Figure 2b (1,500-fold magnification).

[Example 1]

2.5 g of the titanium dioxide prepared in Preparation Example 1 was supported in 100 ml of ethanol in which Ruthenium 535 bis-TBA ($C_{58}H_{86}0_8N_8S_2Ru$, Dyesol Co.,) was dissolved in a concentration of $1\times10^{-4}$M, and then stirred for 24 hours.

Said solution was centrifuged at a speed of 10,000 rpm for 10 minutes using a centrifuge (5804 R, Eppendorf) to separate a colorless solution at the upper part and a violet layer at the lower part. The titanium dioxide dyed as such was dried in a drying oven at 120°C for 12 hours.

Subsequently, 0.01 g of platinum (Pt) and 3.8 g of titanium dioxide were added to 2,000 ml of 2M $Na_2CO_3$ solution and stirred for 5 hours, while being irradiated with a 500W mercury lamp (Hg lamp), and the resulting solution was centrifuged at a speed of 10,000 rpm for 10 minutes using said centrifuge and washed 3 times using distilled water.
Then, the washed solution was dried at 80°C for 12 hours to finally prepare a photocatalyst in a state of platinum/dye/$TiO_2$.

[Example 2]

1.5 g of the titanium dioxide synthesized in Preparation Example 1 was supported in 100 ml of ethanol in which Ruthenium 535 bis-TBA ($C_{58}H_{86}0_8N_8S_2Ru$, Dyesol Co.) was dissolved, and stirred for 24 hours, by the same method as in Example 1.
6.8 g of the resulting titanium dioxide was mixed with 0.01 g of platinum used in Example 1 to prepare a photocatalyst in a state of platinum/dye/ $TiO_2$.

[Examples 3 to 5 and Comparative Examples 1 to 5]

Photocatalysts were prepared by the same method as in Examples 1 and 2, except that they were prepared depending on the conditions represented in Table 1 below.

[Experimental Example]

A photolysis experiment of a gas phase acetone was carried out using a cylindrical reactor having a diameter of 50 mm and a length of 1 m. A mercury lamp (500 W, main wavelength 365 nm) was used as a light source, and 15 glass tubes were used in the reactor.
Photocatalysts prepared in Examples 1 to 5 and Comparative Examples 1 to 4 were added to 100 ml of titanium-based inorganic binder in a sol state by 2.5 g, respectively, and stirred, and then dip coated on surfaces of optical fibers. The thickness of photocatalyst layers obtained was the same as represented in Table 1 .
Subsequently, a mixture containing moisture and organic compounds as a target for degradation was supplied to each photoreactor comprising photocatalysts prepared in accordance with Examples 1 to 5 and Comparative Examples 1 to 4 as shown in Table 1 at a flow rate of 300 mL/sec. After retention for 30 seconds, concentrations of organic compounds in the collected exhaust gas were measured and the results are represented in Table 1 below.

[Table 1]

| | | Photocatalyst | | | Photocatalyst Layer | | Photolysis Process | | |
|---|---|---|---|---|---|---|---|---|---|
| | | Platinum (g/g-$TiO_2$) | Dye | | Specific Surface Area ($m^2/g$) | Thickness ($\mu m$) | Moisture (vol%) | Target Material | Optical Resolution (%) |
| | | | Kind | Concentration (M/g-$TiO_2$) | | | | | |
| Example | 1 | $2.6\times10^{-3}$ | A | $4\times10^{-5}$ | 175 | 6.9 | 30 | Acetone | 99.9 |
| | 2 | $1.5\times10^{-3}$ | A | $6\times10^{-5}$ | 175 | 5.7 | 35 | MEK | 99.2 |
| | 3 | $3.2\times10^{-3}$ | A | $1\times10^{-4}$ | 185 | 4.1 | 40 | Toluene | 96 |
| | 4 | $1.9\times10^{-4}$ | A | $5\times10^{-5}$ | 220 | 5.3 | 45 | Acetone | 99.7 |
| | 5 | $3.1\times10^{-4}$ | A | $9\times10^{-5}$ | 215 | 5.9 | 50 | MEK | 99.9 |
| Comparative Example | 1 | 0 | A | $3\times10^{-5}$ | 60 | 5.3 | 30 | Acetone | 91.3 |
| | 2 | $2.1\times10^{-4}$ | - | 0 | 125 | 0.2 | 35 | Toluene | 89.5 |
| | 3 | $1.9\times10^{-3}$ | C.I.20470 | $6\times10^{-5}$ | 185 | 4.1 | 0 | Toluene | 86.5 |
| | 4 | $2.1\times10^{-4}$ | C.I.27700 | $5\times10^{-4}$ | 155 | 3.6 | 60 | MEK | 91.1 |

* A: cis-bis(isothiocyanato)bis(2,2'-bipyridyl-4,4'-dicarboxylato)-ruthenium(II)bis-tetrabutylammonium
* C.I.20470: acid black 1
* C.I.27700: direct black 17

The present invention provides a photocatalyst which has excellent photoactivity in visible light, while having excellent light resistance and photosensitivity, to express the photolysis effect efficiently even in poor UV light intensity, compared to the photocatalysts conventionally used, and a method of preparing the same. In addition, the present invention provides a photolysis process for decomposing and removing hazardous volatile organic compounds efficiently using a photoreactor containing said photocatalyst.

In the drawings and specification, there have been disclosed typical exemplary embodiments of the invention and, although specific terms are employed, they are used in a generic and descriptive sense only and not for purposes of limitation. As for the scope of the invention, it is to be set forth in the following claims. Therefore, it will be understood by those of ordinary skill in the art that various changes in form and details may be made therein without departing from the spirit and scope of the present invention as defined by the following claims.

## Claims

**1.** A photocatalyst comprising a core part containing titanium dioxide; and
a doped part, formed on surfaces of said core part, containing a ruthenium-based dye and a platinum compound.

**2.** The photocatalyst according to claim 1, wherein the titanium dioxide has a specific surface area of 50 $m^2/g$ to 350 $m^2/g$.

**3.** The photocatalyst according to claim 1, wherein the ruthenium-based dye is a compound represented by Formula 1, or a salt thereof:

[Formula 1] $\mathbf{RuL_2(M)_2}$

wherein, "L" is 2,2'-bipyridine containing at least one functional group selected from the group consisting of hydrogen, a $C_{1-12}$ alkyl group and -C(=O))$R_1$, where $R_1$ is hydrogen or tetrabutylammonium, and M is NCS, CN, Cl, Br or I.

**4.** The photocatalyst according to claim 1, wherein the platinum compound is platinum, or a platiniferous compound.

**5.** The photocatalyst according to claim 1, wherein the photocatalyst comprises 0.01 to 5 parts by weight of the ruthenium-based dye; and 0.01 to 2 parts by weight of the platinum compound, relative to 100 parts by weight of titanium dioxide.

**6.** The photocatalyst according to claim 1, wherein the ruthenium-based dye and the platinum compound are doped sequentially on the core part.

**7.** A method of preparing a photocatalyst according to any one of claims 1 to 6 comprising a step of doping a ruthenium-based dye and a platinum compound on surfaces of titanium dioxide.

**8.** The method of preparing a photocatalyst according to claim 7, wherein titanium dioxide is prepared by a first synthesis process comprising
the step (1) of extracting and separating a surfactant from a reactant containing a solvent, a surfactant and titanium alkoxide; and
the step (2) of sintering the residual reactant from which the surfactant is separated in said step (1).

**9.** The method of preparing a photocatalyst according to claim 8, wherein the reactant in the step (1) comprises 2 to 25 parts by weight of the surfactant; and 1 to 10 parts by weight of titanium alkoxide, relative to 100 parts by weight of the solvent.

**10.** The method of preparing a photocatalyst according to claim 7, wherein titanium dioxide is prepared by a second synthesis process comprising
the step (A) of reacting a mixture containing a solvent, titanium alkoxide and an activated carbon; and
the step (B) of heat treating the reactant obtained in the step (A) to burn the activated carbon.

**11.** The method of preparing a photocatalyst according to claim 10, wherein the activated carbon has an average particle diameter of 0.1 to 10 $\mu$m.

**12.** The method of preparing a photocatalyst according to claim 10, wherein the mixture in the step (A) comprises 5 to

15 parts by weight of titanium alkoxide; and 0.5 to 10 parts by weight of the activated carbon, relative to 100 parts by weight of the solvent.

**13.** The method of preparing a photocatalyst according to claim 10, wherein the heat treatment in the step (B) is carried out at a temperature of 400 to 700°C.

**14.** A photoreactor comprising a support; and
a photocatalyst layer, formed on said support, containing a photocatalyst according to any one of claims 1 to 6.

**15.** A photolysis process comprising a step of providing a photoreactor according to claim 14 with volatile organic compounds and moisture.

FIG. 1

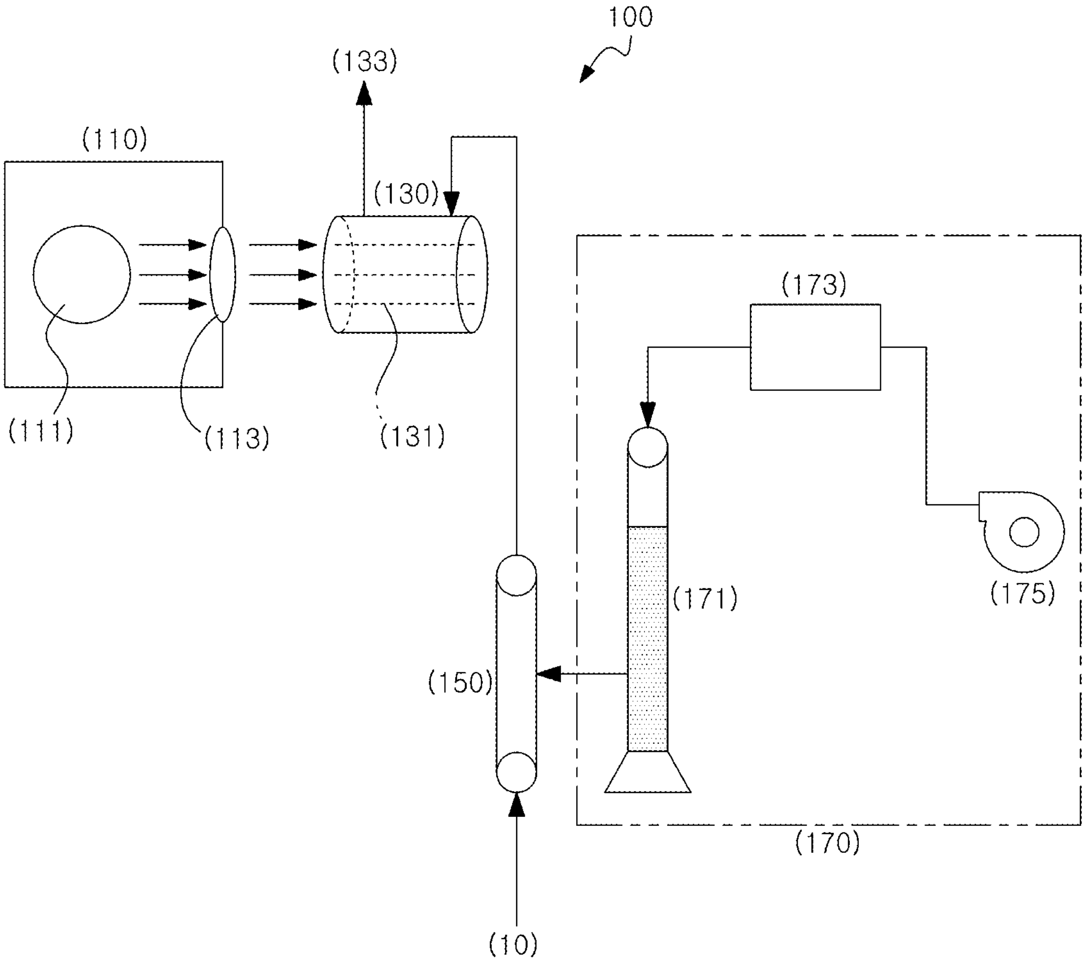

FIG. 2a

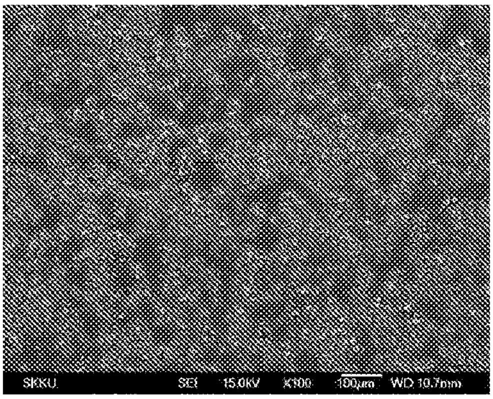
SKKU
SEI
15.0kV
X100
100μm
WD 10.7mm

FIG. 2b

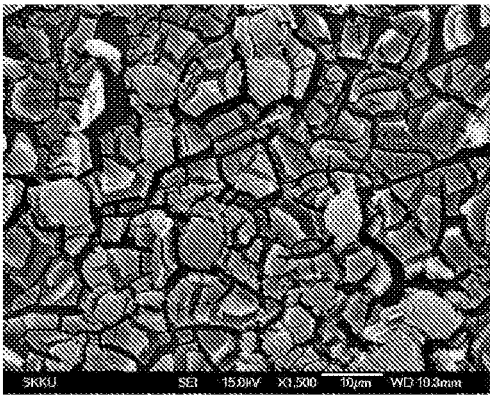
SKKU
SEI
15.0kV
X1,500
10μm
WD 10.3mm

Europäisches Patentamt
European Patent Office
Office européen des brevets

# EUROPEAN SEARCH REPORT

Application Number
EP 09 17 5086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br><br><br><br><br>Y | TIAN YOU PENG ET AL: "Influence of Ru(II) Bipyridyl Complex on the Photocatalytic H2 Evolution over TiO2 Nanoparticles with Mesostructures"<br>MULTI-FUNCTIONAL MATERIALS AND STRUCTURES PART 2,, 1 June 2008 (2008-06-01), pages 825-828, XP009139920<br>* abstract *<br>* page 825, last paragraph *<br>* figure 1 *<br>----- | 1-4,6,7<br><br><br><br><br><br><br>8-13 | INV.<br>B01J35/00<br>B01J23/42<br>B01J23/46<br>B01D53/86<br>B01J31/18<br>B01J21/06 |
| X<br><br><br><br><br><br><br><br><br><br><br><br><br>Y | BAE E ET AL: "Effects of Surface Anchoring Groups (Carboxylate vs Phosphonate) in Ruthenium-Complex-Sensitized TiO2 on Visible Light Reactivity in Aqueous Suspensions"<br>JOURNAL OF PHYSICAL CHEMISTRY. B (ONLINE), AMERICAN CHEMICAL SOCIETY, COLUMBUS, OH, US LNKD- DOI:10.1021/JP047777P,<br>vol. 108, no. 37,<br>24 August 2004 (2004-08-24), pages 14093-14101, XP002554339<br>ISSN: 1520-5207<br>* abstract *<br>* page 14094, left-hand column, paragraph 2nd - right-hand column, paragraph 1st *<br>* page 14095, left-hand column, paragraph 2nd-4th *<br>* page 14095, right-hand column, paragraph 2nd *<br>-----<br>-/-- | 1,2,4,6,<br>7,14,15<br><br><br><br><br><br><br><br><br><br><br><br>8-13 | TECHNICAL FIELDS SEARCHED (IPC)<br>B01J<br>B01D |

The present search report has been drawn up for all claims

| Place of search | Date of completion of the search | Examiner |
|---|---|---|
| Munich | 14 October 2010 | Jourdan, Angelika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1

EPO FORM 1503 03.82 (P04C01)

Europäisches Patentamt
European Patent Office
Office européen des brevets

# EUROPEAN SEARCH REPORT

Application Number
EP 09 17 5086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br><br><br><br>Y | E.BAE AND W.CHOI: "Highly Enhanced Photoreductive Degradation of Perchlorinated Compounds on Dye-Sensitized Metal/TiO2 under Visible Light"<br>ENVIRON. SCI. TECHNOL.,<br>vol. 37, 2003, pages 147-152, XP002605110<br>* abstract *<br>* page 147, right-hand column, paragraph 4th - page 148, left-hand column *<br>----- | 1,2,4-7,14,15<br><br><br><br><br><br>8-13 | |
| Y | D.P.SERRANO: "Develpment of crystallinity and photocatalytic properties in porous TiO2 by mild acid treatment"<br>J.MATER.CHEM.,<br>vol. 17, 2 January 2007 (2007-01-02), pages 1178-1187, XP002605111<br>* abstract *<br>* page 1179, right-hand column, paragraph 3rd *<br>----- | 8,9 | |
| Y | G.YU ET AL.: "The photocatalytic activity and stability of a nanosized TiO2 film prepared by carbon black modified method"<br>CATALYSIS TODAY,<br>vol. 90, 2004, pages 305-312, XP002605112<br>* page 305, right-hand column, last paragraph - page 306, left-hand column, paragraph 3rd *<br>* tables 1,3 *<br>-----<br>-/-- | 10-13 | TECHNICAL FIELDS SEARCHED (IPC) |

The present search report has been drawn up for all claims

1

| Place of search | Date of completion of the search | Examiner |
|---|---|---|
| Munich | 14 October 2010 | Jourdan, Angelika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 09 17 5086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LUO F ET AL: "Post-modification using aluminum isopropoxide after dye-sensitization for improved performance and stability of quasi-solid-state solar cells" JOURNAL OF PHOTOCHEMISTRY AND PHOTOBIOLOGY, A: CHEMISTRY, ELSEVIER SEQUOIA, LAUSANNE, CH LNKD- DOI:10.1016/J.JPHOTOCHEM.2008.02.011, vol. 197, no. 2-3, 25 June 2008 (2008-06-25), pages 375-381, XP022649463 ISSN: 1010-6030 [retrieved on 2008-02-19] * page 376, right-hand column, paragraph 2nd-4th * ----- | 1-15 | |
| | | | TECHNICAL FIELDS SEARCHED (IPC) |

The present search report has been drawn up for all claims

1

| Place of search | Date of completion of the search | Examiner |
|---|---|---|
| Munich | 14 October 2010 | Jourdan, Angelika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020090045679
- KR 0324541
- KR 0469005
- KR 0714849